# EUROPÄISCHE PATENTANMELDUNG

(11) **EP 1 616 473 A1**
(43) Veröffentlichungstag der Anmeldung: **18.01.2006**
(21) Anmeldenummer: 05011553.4
(22) Anmeldetag: 28.05.2005
(51) Int. Cl.: A01D 34/84

(54) **Rasenkantenschneider**

(30) Priorität: 26.06.2004 DE 202004010048 U
(71) Anmelder: KMK Kunststoff- und Montagetechnik GmbH, 56348 Dörscheid (DE)
(72) Erfinder: Kolb, Walter, 57518 Betzdorf (DE)
(74) Vertreter: Fuchs Mehler Weiss & Fritzsche

(57) **Zusammenfassung**

Es wird ein Rasenkantenschneider mit einem einen Handgriff (4) aufweisenden Fahrgestell (2) mit einem Gehäuse (3) beschrieben, in welchem ein Motor (10) angeordnet ist. Der Motor (10) treibt ein rotierendes Messer (5) mit im wesentlichen senkrechter Schnittebene an, wobei in Vorschubrichtung gesehen unmittelbar hinter dem Messer (5) ein Kantenabweiser (6) angeordnet ist, welcher abgetrennte Grassoden von der Schnittfläche abdrängt.

## Beschreibung

Die vorliegende Erfindung betrifft einen Rasen- bzw. Beetkantenschneider.

Im Hobbygartenbereich besteht oftmals der Wunsch, Rasenkanten oder auch Beetkanten abzustechen, um insofern einen sauberen Abschluss eines Beetes oder einer Rasenfläche zu erzeugen.

Die einfachste, aber auch die körperlich am anstrengendste Möglichkeit besteht darin, die Kanten mit einem Spaten abzustechen. Auch ein dafür geschaffener Kantenstecher, der als Halbmond ausgebildet ist, ist dafür geeignet.

Es gibt darüber hinaus seit Jahrzehnten Kantenstecher, die unter Ausführung einer seitlichen Vorwärtsbewegung eine Rasenkante abstechen. Die Vorwärtsbewegung ist auf einem stoßenden Prinzip aufgebaut und erfordert eine entsprechende Kraftaufwendung.

Um überhängenden Rasen zu entfernen sind so genannte Rasenkantenscheren bekannt, die mittels Batterieantrieb oder durch Hand die Rasenkante beschneiden.

Es sind auch motorbetriebene Kantenschneider bekannt, die einen rotierenden Messerbalken oder Messer aufweisen, welche die Kanten einschneiden, aber nicht sauber trennen, wie dies bei Anwendung beispielsweise eines Spatens der Fall ist.

Vor diesem Hintergrund ist die Aufgabe der vorliegenden Erfindung einen Rasenkantenschneider anzugeben, der eine Rasenkante sauber abstechen und sauber trennen kann. Gelöst wird diese Aufgabe durch einen Rasenkantenschneider mit einem einen Handgriff aufweisenden Fahrgestell mit einem Gehäuse, in welchem ein Motor angeordnet ist, der ein rotierendes Messer mit im Wesentlichen senkrechter Schnittebene antreibt. In Vorschubrichtung gesehen ist unmittelbar hinter dem Messer ein Kantenabweiser angeordnet, welcher abgetrennte Grassoden von der Schnittfläche abdrängt. Abstechen und Abtrennen der Kante ist mit dem Rasenkantenschneider in einem Arbeitsgang zu bewerkstelligen.

Bevorzugt ist vorgesehen, dass in Vorschubrichtung gesehen zumindest vorne wenigsten eine Stützrolle angeordnet ist. Diese Stützrolle kommt auf der Rasenfläche zu liegen.

Gemäß einer noch weiteren Ausführungsform ist auch am hinteren Ende wenigstens eine Stützrolle vorgesehen, die ebenfalls auf der Rasenfläche zu liegen kommt. Wenn der Rasenkantenschneider sowohl vorne als auch hinten wenigstens eine Stützrolle aufweist, werden keine anderen Räder oder dergleichen benötigt. Dann läuft das Gerät ausschließlich auf den Stützrollen.

Besonders bevorzugt ist eine Weiterbildung, bei der wenigstens eine Stützrolle von einem vom Motor angetriebenen Antriebsmechanismus, beispielsweise ein Getriebe, angetrieben ist. In diesem Ausführungsbeispiel sorgt der Motor von sich aus für den notwendigen Vorschub, so dass die Bedienerperson das Gerät nur noch führen muss. Der Kraftaufwand hierfür ist dann minimal.

Der Motor kann ein Verbrennungsmotor oder aber ein Elektromotor mit Anschluss an das Hausnetz oder auch mit einer Batterie sein.

Handelt es sich bei dem Rasenkantenschneider um ein motorangetriebenes Gerät, ist vorteilhaft vorgesehen, dass wenigsten die angetriebene Stützrolle auf ihrem Umfang ausgebildete Längsrippen aufweist. Hierdurch wird die Traktion der angetriebenen Stützrolle entscheidend verbessert, so dass der Vorschub zuverlässig erfolgt.

Besonders bevorzugt wird eine Ausführungsform, bei der die Schnitttiefe mittels eines höhenverstellbaren und arretierbaren Einstellmechanismus einstellbar ist. Der Einstellmechanismus kann aus einer höhenverstellbaren Sichelplatte bestehen, welche mit einem Arretierungsprofil zusammen arbeitet. Besonders bevorzugt wirkt der Einstellmechanismus auf die wenigstens eine hintere Stützrolle ein.

Das Messer kann scheibenförmig ausgebildet sein. Alternativ hierzu ist eine sternenförmige Konfiguration möglich, bei dem an einem scheibenförmigen Messergrundkörper auswechselbare Messer angeordnet sind. Denkbar ist auch der Einsatz von losen Kunststoffklingen, mit welchem ein scheibenförmiger Messergrundkörper bestückt wird. Diese losen Kunststoffklingen stabilisieren sich im Betrieb aufgrund der auf sie einwirkenden Fliehkraft.

In besonders einfacher, aber auch wirksamer Weise ist der Kantenabweiser bevorzugt aus einem am Gehäuse des Gerätes angeordneten gebogenen Blech gebildet.

Der Kantenabweiser legt die abgetrennte Rasenkante wie ein Pflug zur Seite, so dass die abgestochenen Grassoden leicht durch ein übliches Gartengerät aufgenommen oder zusammengerecht werden können.

Die Erfindung wird anhand eines Ausführungsbeispiels näher erläutert. Hierbei zeigt:
- Figur 1: Die schematische Ansicht des Rasenkantenschneiders,
- Figur 2: schematisch den Einsatz des Rasenkantenschneiders, von hinten rechts gesehen,
- Figur 3: den Einsatz des Rasenkantenschneiders, von oben gesehen,
- Figur 4: den Antriebsmechanismus der vorderen Stützrolle, und
- Figur 5: den Einstellmechanismus zum Einstellen der Schnitttiefe.

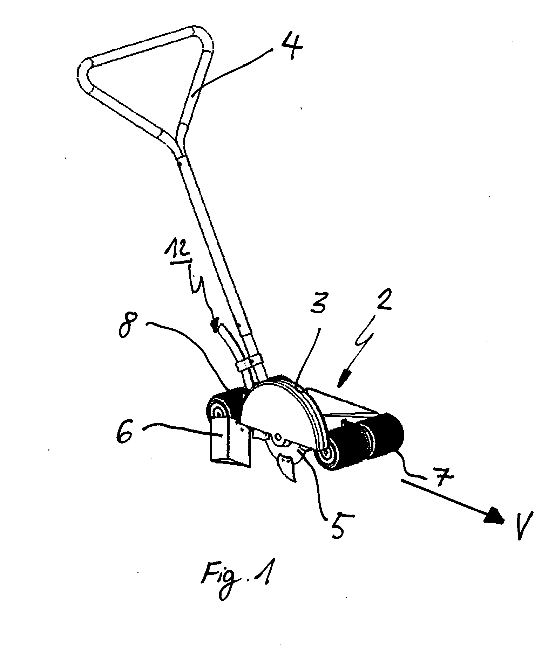

Einen ersten Überblick verschafft Figur 1.

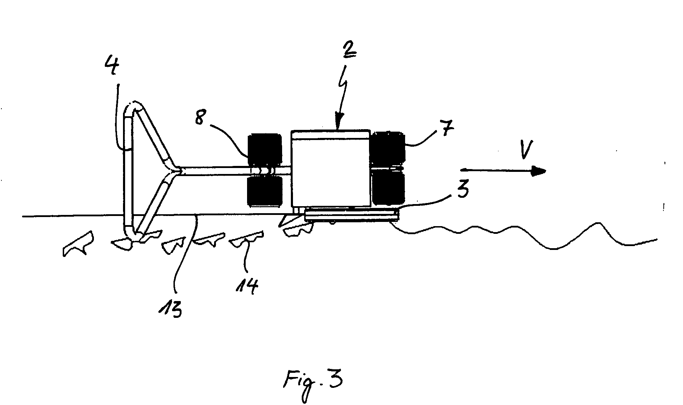

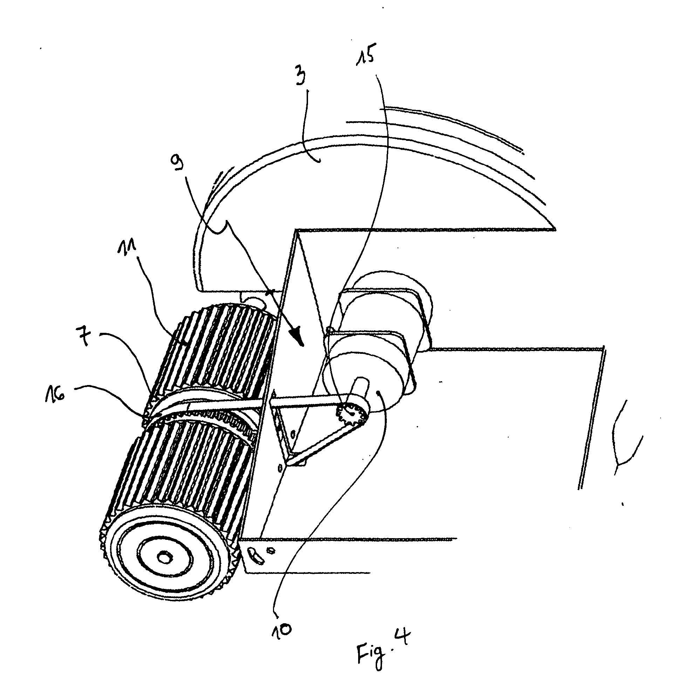

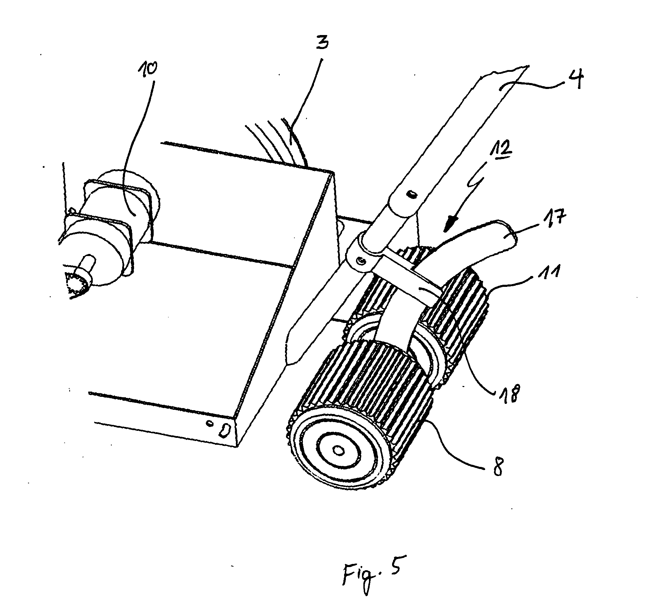

Das Gerät weist ein Fahrgestell 2 auf, an das ein Handgriff 4 angelenkt ist. Es weist ein Gehäuse 3 auf, welches vorliegend im wesentlichen als Schutzblech ausgebildet ist für ein rotierendes Messer 5, welches vorliegend sternenförmig ausgebildet ist. Das Messer sitzt auf einer Welle eines Motors 10 (Figur 4), vorliegend eines Elektromotors.

Am in Vorschubrichtung V vorne sowie am hinteren Ende des Fahrgestells 2 sind jeweils Stützrollen 7 bzw. 8 vorgesehen, auf denen das Gerät geschoben wird oder aber angetrieben wird.

In Vorschubrichtung V gesehen unmittelbar hinter dem Messer 5 ist ein Kantenabweiser 6 angeordnet. Der Kantenabweiser 6 legt abgetrennte Grassoden zur Seite hin um.

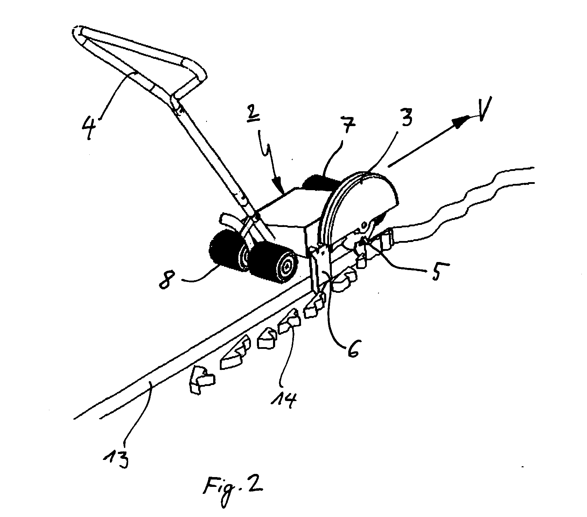

Die Arbeitsweise des Gerätes ist in den Figuren 2 und 3 veranschaulicht. Das Gerät wird gemäß Figur 2 an die zu versäubernde Rasenkante 13 gesetzt, und zwar so, dass das Messer 5 die abzutrennenden Teile 14 von der Kante 13 abtrennt. Der Kantenabweiser 6 lenkt die abgetrennten Teile 14 dann fort von der Rasenkante 13, so dass sie leicht aufgesammelt werden können.

Figur 4 veranschaulicht die motorangetriebene Variante des Rasenkantenschneiders. Vorliegend ist mit dem Motor 10 auf der dem Messer abgewandten Seite ein Antriebsmechanismus 9 vorgesehen, welcher vorliegend als Zahnriemengetriebe ausgebildet ist. Hierzu sitzt auf dem Wellenende ein Zahnrad 15, über welches ein Zahnriemen 16 geführt ist, der mit einem Zahnkranz zusammenarbeitet, der an der Stützrolle 7 am vorderen Ende des Fahrgestells ausgebildet ist. Der Motor 10 treibt also in dieser Ausführungsform sowohl das Messer 5 als auch die vordere Stützrolle 7 an. Um die Traktion zu verbessern weist die Stützrolle 7 auf ihrem Umfang ausgebildete Längsrippen 11 auf.

Figur 5 zeigt eine Ausführungsform, bei der die Schnitttiefe mittels eines Einstellmechanismus 12 einstellbar ist. Der Einstellmechanismus 12 wirkt vorliegend auf die hintere Stützrolle 8 ein, indem deren Achse in einer Sichelplatte 17 gelagert ist, die ihrerseits durch ein Arretierungsprofil 18 auf eine Einstellhöhe verstellt werden kann. Die Schnitttiefe wird also vorliegend durch Höhenverstellung der Achse der hinteren Stützrolle 8 eingestellt.

## Patentansprüche

1. Rasenkantenschneider mit einem einen Handgriff (4) aufweisenden Fahrgestell (2) mit einem Gehäuse (3), in welchem ein Motor (10) angeordnet ist, der ein rotierendes Messer (5) mit im wesentlichen senkrechter Schnittebene antreibt, wobei in Vorschubrichtung gesehen unmittelbar hinter dem Messer (5) ein Kantenabweiser (6) angeordnet ist, welcher abgetrennte Grassoden von der Schnittfläche abdrängt.

2. Rasenkantenschneider nach Anspruch 1, welcher in Vorschubrichtung gesehen zumindest vorne wenigstens eine Stützrolle (7) aufweist.

3. Rasenkantenschneider nach Anspruch 2, bei dem wenigstens eine hintere Stützrolle (8) vorgesehen ist.

4. Rasenkantenschneider nach Anspruch 2 oder 3, bei dem wenigstens eine Stützrolle (7) von einem vom Motor (10) angetriebenen Antriebsmechanismus (9) angetrieben ist.

5. Rasenkantenschneider nach Anspruch 4, bei dem wenigstens die angetriebene Stützrolle auf ihrem Umfang ausgebildete Längsrippen (11) aufweist.

6. Rasenkantenschneider nach einem der Ansprüche 1 bis 5, bei dem die Schnitttiefe mittels eines höhenverstellbaren und arretierbaren Einstellmechanismus (12) einstellbar ist.

7. Rasenkantenschneider nach Anspruch 3 und 6, bei dem der Einstellmechanismus (12) auf die wenigstens eine hintere Stützrolle (8) einwirkt.

8. Rasenkantenschneider nach einem der Ansprüche 1 bis 7, bei dem das Messer (5) scheibenförmig ausgebildet ist.

9. Rasenkantenschneider nach einem der Ansprüche 1 bis 7, bei dem das Messer (5) sternförmig ausgebildet ist.

10. Rasenkantenschneider nach einem der Ansprüche 1bis 9, bei dem der Kantenabweiser (6) aus einem am Gehäuse (3) angeordneten gebogenen Blech besteht.
